# EUROPEAN PATENT APPLICATION

(11) **EP 4 737 812 A1**
(43) Date of publication of application: **06.05.2026**
(21) Application number: 25212058.9
(22) Date of filing: 29.10.2025
(51) Int. Cl.: F24F 11/37, F24F 11/88, F24F 11/46, F24F 11/47

(54) **HEATING, VENTILATION AND AIR-CONDITIONING (HVAC) SYSTEM BATTERY TRANSFER SWITCH**

(30) Priority: 29.10.2024 US 202463713174 P
(71) Applicant: Carrier Corporation, Palm Beach Gardens, FL 33418 (US)
(72) Inventor: Makwinski, Mark, Palm Beach Gardens, FL 33418 (US)
(74) Representative: Dehns

(57) **Abstract**

A heating, ventilation and air-conditioning (HVAC) system (1001) is provided. The HVAC system (1001) includes a first HVAC unit (1010), a second HVAC unit (1020) including a battery (1021), a panel (1030) receptive of grid power and a switch element (1060). The switch element (1060) is separate from the panel (1030) and configured to assume a first state in which electricity is transmissible from the panel (1030) to the first and second HVAC units (1010, 1020) when the grid power is available and a second state in which electricity is transmissible from the battery (1021) to the first HVAC unit (1010) when the grid power is unavailable.

## Description

### BACKGROUND

The embodiments described herein relate to air conditioning systems.

Electrical energy drives a myriad of devices and equipment in commercial, industrial, residential applications, and data centers. For example, electrical energy drives lights, motors, household appliances, medical equipment, computers, air conditioning systems, electric vehicle charging stations, data centers processing and cooling needs, and many other electrical devices. In most areas, power utilities generate and distribute electricity through an AC power grid. Shortages and/or increased costs associated with the use of fossil fuels, intermittency of renewable resources, power demand and supply variabilities, and increased demand of energy, among other factors, significantly impact the continuous availability and cost of electricity to consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy, or wind variability, if the power from the grid comes from wind turbines. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons, including maintenance. During these times of lost power, the sites may be unable to continue operations. Moreover, increasing numbers of data centers significantly add to the demand of energy from the grid.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, data centers and residential applications typically draw power from the power grid during times of peak demand, despite the higher costs associated with its generation.

Some energy consumers, such as commercial, industrial, data centers, and residential users may be driven by factors other than cost, such as a desire to support sustainable energy options as further described below.

### SUMMARY

According to a first aspect of the invention, a heating, ventilation and air-conditioning (HVAC) system is provided. The HVAC system includes a first HVAC unit, a second HVAC unit including a battery, a panel receptive of grid power and a switch element. The switch element is separate from the panel and configured to assume a first state in which electricity is transmissible from the panel to the first and second HVAC units when the grid power is available and a second state in which electricity is transmissible from the battery to the first HVAC unit when the grid power is unavailable.

Optionally, the electricity is transmissible from the battery to the first HVAC unit as direct current (DC).

Optionally, the switch element is automatic and includes a controller to place the switch element in the first and second states in accordance with the grid power being available and unavailable, respectively.

Optionally, the first HVAC unit includes an additional battery and the controller operates the switch element to optimize power sharing between the battery and the additional battery.

Optionally, the switch element includes a first switch electrically interposed between the panel and the first HVAC unit and a second switch electrically interposed between the panel and the second HVAC unit and the first and second switches operate independently from one another.

Optionally, the HVAC system further includes at least one of one or more additional power sources in parallel with the battery and one or more additional first switches in parallel with the first switch and one or more additional loads in parallel with the first HVAC unit and one or more additional second switches in parallel with the second switch.

Optionally, the switch element includes a first switch electrically interposed between the panel and the first HVAC unit and a second switch electrically interposed between the panel and the second HVAC unit and the first and second switches operate in tandem.

Optionally, the HVAC system further includes at least one of one or more additional power sources in parallel with the battery and one or more additional first switches in parallel with the first switch and one or more additional loads in parallel with the first HVAC unit and one or more additional second switches in parallel with the second switch.

According to a second aspect of the invention, a heating, ventilation and air-conditioning (HVAC) system is provided. The HVAC system includes a first HVAC unit, a second HVAC unit including a battery, a panel receptive of grid power, first and second power lines by which electricity is transmissible from the panel to the first and second HVAC units, respectively, and a switch element. The switch element is separate from the panel and configured to assume a first state in which electricity is transmissible from the panel to the first and second HVAC units via the first and second power lines, respectively, when the grid power is available and a second state in which the first and second power lines are electrically open and electricity is transmissible from the battery to the first HVAC unit when the grid power is unavailable.

Optionally, the electricity is transmissible from the battery to the first HVAC unit as direct current (DC).

Optionally, the switch element is automatic and includes a controller to place the switch element in the first and second states in accordance with the grid power being available and unavailable, respectively.

Optionally, the first HVAC unit includes an additional battery and the controller operates the switch element to optimize power sharing between the battery and the additional battery.

Optionally, the switch element includes a first switch electrically interposed between the panel and the first HVAC unit along the first power line and a second switch electrically interposed between the panel and the second HVAC unit along the second power line and the first and second switches operate independently from one another.

Optionally, the HVAC system further includes at least one of one or more additional power sources in parallel with the battery and one or more additional first switches in parallel with the first switch and one or more additional loads in parallel with the first HVAC unit and one or more additional second switches in parallel with the second switch.

Optionally, the switch element includes a first switch electrically interposed between the panel and the first HVAC unit along the first power line and a second switch electrically interposed between the panel and the second HVAC unit along the second power line and the first and second switches operate in tandem.

Optionally, the HVAC system further includes at least one of one or more additional power sources in parallel with the battery and one or more additional first switches in parallel with the first switch and one or more additional loads in parallel with the first HVAC unit and one or more additional second switches in parallel with the second switch.

According to a third aspect of the invention, a method of retrofitting a heating, ventilation and air-conditioning (HVAC) system with battery switching is provided. The HVAC system initially includes first and second power lines electrically interposed between a panel, which is receptive of grid power, and first and second HVAC units, respectively. The method includes disposing first and second switches separately from the panel and along the first and second power lines, respectively, and configuring the first and second switches to assume a first state in which electricity is transmissible from the panel to the first and second HVAC units via the first and second power lines, respectively, when the grid power is available and a second state in which the first and second power lines are electrically open and electricity is transmissible from a battery of the second HVAC unit to the first HVAC unit when the grid power is unavailable.

Optionally, the first HVAC unit includes an additional battery and the configuring of the first and second switches includes configuring the first and second switches to optimize power sharing between the battery and the additional battery.

Optionally, the configuring of the first and second switches includes configuring the first and second switches to operate independently from one another.

Optionally, the configuring of the first and second switches includes configuring the first and second switches to operate in tandem.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a system.
FIG. 2 depicts a controller.
FIG. 3A depicts an electrical architecture.
FIG. 3B depicts an electrical architecture.
FIG. 4A depicts an electrical architecture.
FIG. 4B depicts an electrical architecture.
FIG. 5A depicts an electrical architecture for a fixed speed compressor having a DC architecture.
FIG. 5B depicts an electrical architecture for a fixed speed compressor having an AC architecture.
FIG. 5C depicts an electrical architecture for a variable speed compressor having a DC architecture.
FIG. 5D depicts an electrical architecture for a variable speed compressor having an AC architecture.
FIG. 6 depicts an electrical architecture for a compressor powered by a multilevel inverter.
FIG. 7 depicts one phase leg of a five level, multiphase inverter.
FIG. 8 depicts communication between a controller, a thermostat and a remote system.
FIG. 9 depicts a control process.
FIGS. 10A and 10B depict an HVAC system with battery switching capability.
FIG. 11 is a schematic diagram of a manual switch of the HVAC system of FIGS. 10A and 10B.
FIG. 12 is a schematic diagram of a controller of a switch of the HVAC system of FIGS. 10A and 10B.
FIG. 13 depicts an HVAC system with parallel battery switching capability.
FIG. 14 is a flow diagram illustrating a method of retrofitting an HVAC system with battery switching capability.

### DETAILED DESCRIPTION

With current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to an air conditioning system that includes electrical energy storage systems (e.g., batteries, supercapacitors) to provide a level of dispatchability needed to interconnect with the electrical power grid.

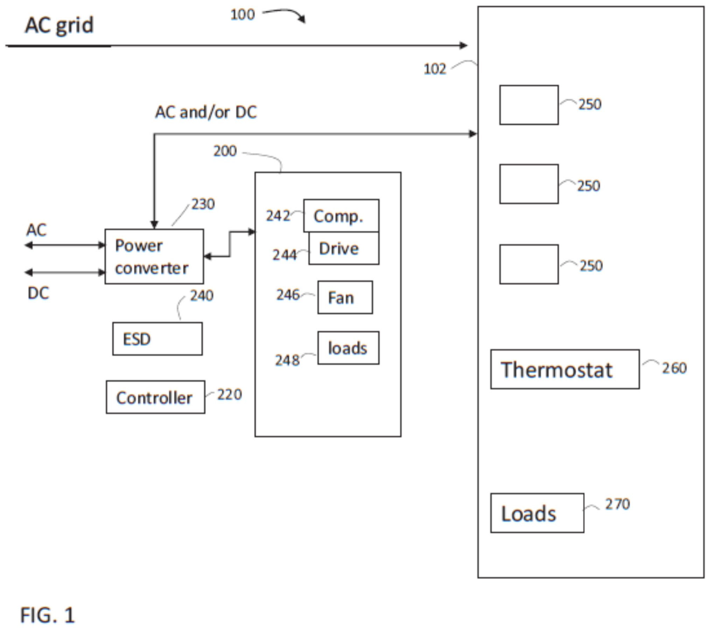

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the disclosure.

The controller 220 may communicate with an air conditioning controller system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid, powered solely by the energy storage device 240, and powered by both the AC power grid and the energy storage device 240, in conjunction. The one or more components of the air conditioning system include components in the first unit 200, components in the second unit 250.

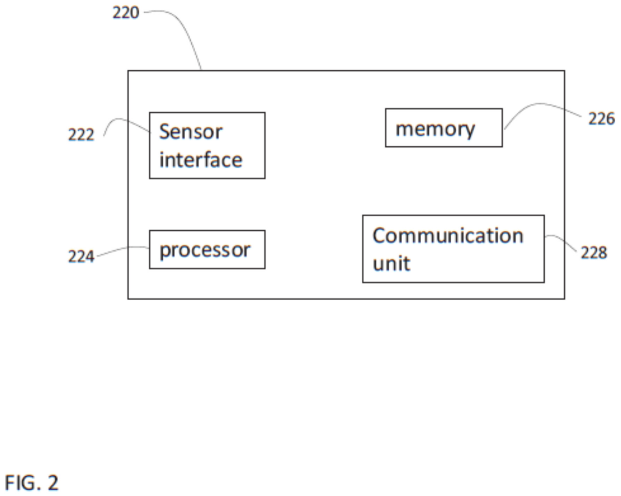

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present disclosure may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, supercapacitor, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

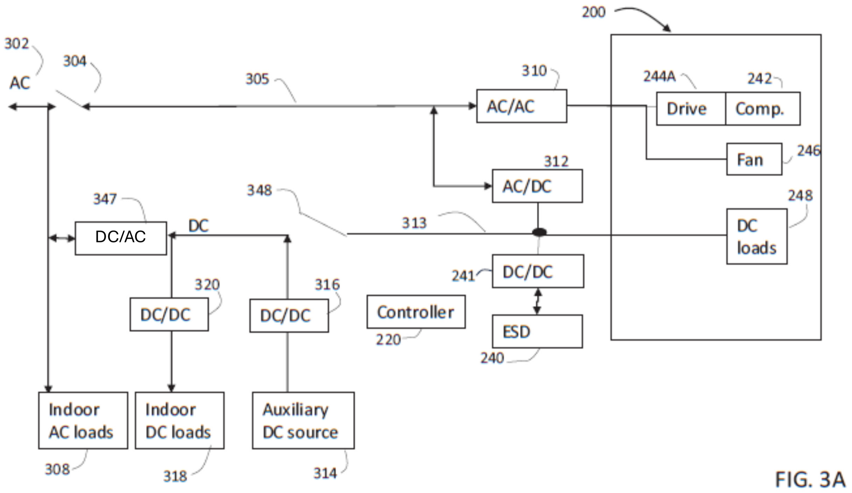

FIG. 3A depicts an electrical architecture in an example embodiment. The location of components in FIG. 3A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

As shown in FIG. 3A, an AC power grid 302 is connected to the first unit 200 through a grid disconnect 304, which is under control of the controller 220. This allows the first unit 200 to be powered by the energy storage device 240, independent of the AC power grid 302. The first unit 200 may also be powered by both the AC power grid 302 and the energy storage device 240 in conjunctions. The disconnect 304 may also be implemented as a mechanical switch controlled, for example by controller 220 or in software by the controller 220 by controlling one or more power converters.

The AC power grid 302 is connected to indoor AC loads 308 (such as an air handler, or any fixture in residential, commercial, industrial buildings or data centers). The AC power grid 302 is also provided to an AC/AC converter 310 which supplies conditioned AC power to a compressor drive 244A of the compressor 242 and the fan 246. The AC/AC converter 310 may control the amplitude, frequency, phase, etc. of AC power provided to the compressor drive 244A of the compressor 242 and the fan 246.

The AC power grid 302 may also be connected to one of a unidirectional or a bi-directional AC/DC converter 312 which interfaces the AC power bus 305 with a DC power bus 313. The DC power bus 313 supplies power to the DC loads 248, which may be located in the first unit 200. Under certain conditions, the DC power bus 313 supplies power to the one or more of components of the air conditioning system (e.g., compressor 242 and fan 246) through the bi-directional AC/DC converter 312 and the AC/AC converter 310. This allows the one or more of components of the air conditioning system to operate independent of, or in conjunction with, the AC power grid 302. The bi-directional AC/DC converter 312 also allows power from the DC bus 313 to be directed to the AC power grid 302.

The DC power bus 313 may be powered by the energy storage device 240. In charging mode, the DC power bus 313 is used to charge the energy storage device 240 (charger not shown). The DC power bus 313 may also be powered by one or more auxiliary DC sources 314, such as solar DC power, wind DC power, geothermal DC power, fuel cells, etc. A DC/DC converter 316 may be used to couple the auxiliary DC sources 314 to the DC power bus 313. The DC power bus 313 may provide power to indoor DC loads 318. A DC/DC converter 320 may be used to couple the indoor DC loads 318 to the DC power bus 313. A DC/AC converter 347 may be used to couple the DC power bus 313 to indoor AC loads 308 through a disconnect 348. In some operating modes, the energy storage device 240 is used to power indoor AC loads 308. The AC/AC converter 310, the AC/DC converter 312, the DC/DC converter 320, the DC/DC converter 316 and the DC/AC converter 347 may be implementations of the power converter 230 in FIG. 1. In some embodiments, the one or more auxiliary DC sources 314 are connected to the AC power bus 305 through a DC/AC converter (not shown). In other embodiments, the one or more auxiliary power sources provide AC power, which is connected to the AC bus 305 and/or the DC bus 313 through an appropriate AC/AC converter or AC/DC converter.

The compressor drive 244A may be implemented in a variety of manners. In one embodiment, the compressor drive 244A is a switch, such as a contactor or relay, that connects the compressor 242 to the output of the AC/AC converter 310. In other embodiments, the compressor drive 244A may be a power converter, such as an AC/AC converter or an AC/DC converter.

An optional DC/DC converter 241 may provide power conversion between the energy storage device 240 and the DC power bus 313. The DC/DC converter 241 may be a bi-directional converter used to step up or step down a DC voltage so that the energy storage device 240 can power the DC power bus 313 and the DC power bus 313 can charge the energy storage device 240. The DC/DC converter 241 may be part of the energy storage device 240 or may be a separate component from the energy storage device 240.

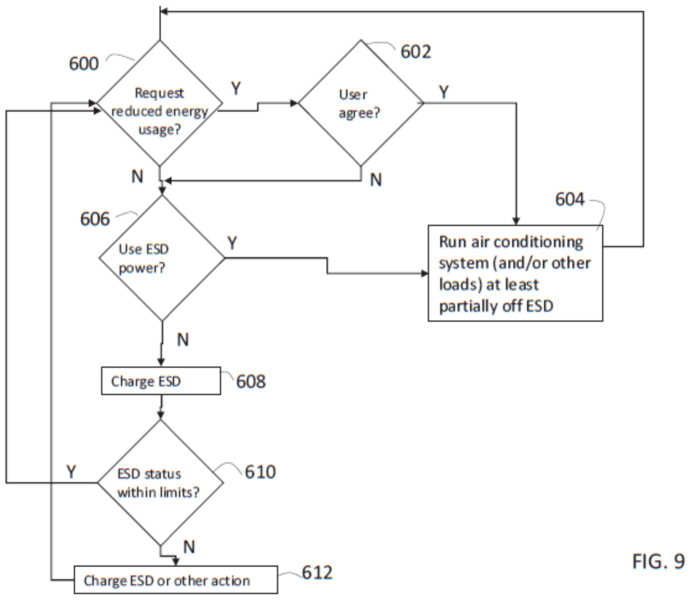

The electrical architecture of FIG. 3A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

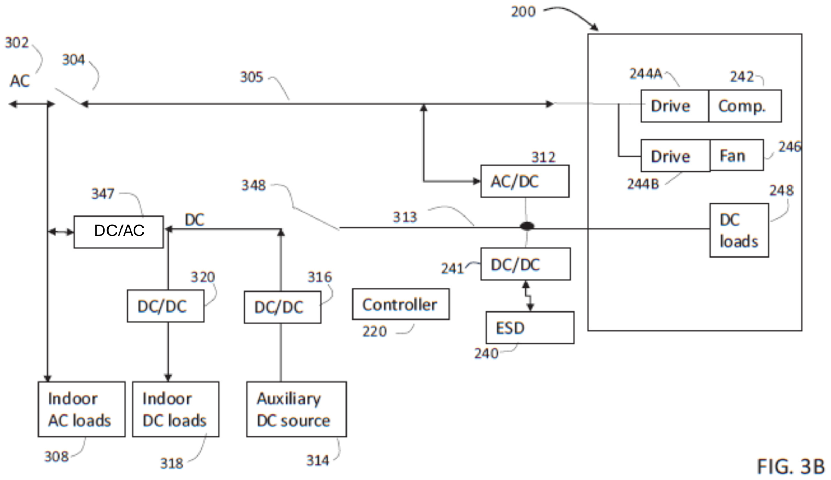

FIG. 3B depicts an electrical architecture in an example embodiment. The location of components in FIG. 3B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 3B is similar to FIG. 3A, with the exception that the AC/AC converter 310 is eliminated. The compressor 242 is provided power from a compressor drive 244A. The compressor drive 244A may be a switch, such as a contactor or relay, that connects the compressor 242 to the AC power bus 305. In other embodiments, the compressor drive 244A may be a power converter, such as an AC/AC converter or an AC/DC converter. The compressor drive 244A may be controlled by the controller 220.

The fan 246 is provided power from a fan drive 244B. The fan drive 244B may be a switch, such as a contactor or relay, that connects the fan 246 to the AC power bus 305. In other embodiments, the fan drive 244B may be a power converter, such as an AC/AC converter or an AC/DC converter. The fan drive 244B may be controlled by the controller 220.

The electrical architecture of FIG. 3B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

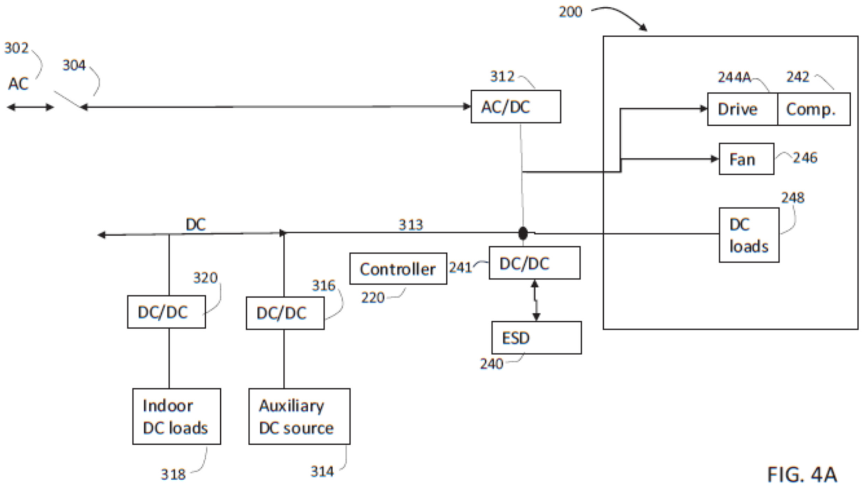

FIG. 4A depicts an electrical architecture in another example embodiment. The location of components in FIG. 4A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

In FIG. 4A, the compressor drive 244A and the fan 246 are DC powered, and as such, there is no need for the AC/AC converter 310. The bi-directional AC/DC converter 312 allows the energy storage device 240 to supply power to one or more components of the air conditioning system and/or feed power from the DC bus 313 to the AC power grid 302, under certain conditions. The bi-directional (or unidirectional) AC/DC converter 312 interfaces the AC power bus 305 with a DC power bus 313.

The compressor drive 244A may be a switch, such as a contactor or relay, that connects the compressor 242 to the DC power bus 313. In other embodiments, the compressor drive 244A may be a power converter, such as a DC/AC converter or a DC/DC converter. The compressor drive 244A may be controlled by the controller 220.

The electrical architecture of FIG. 4A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

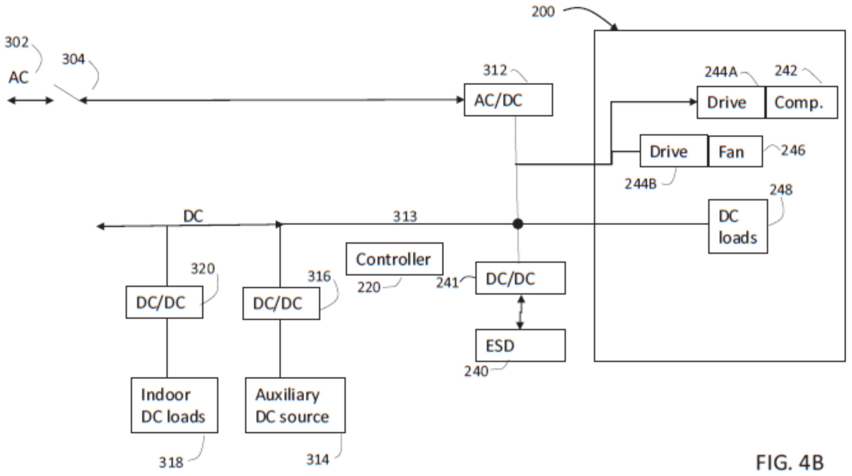

FIG. 4B depicts an electrical architecture in another example embodiment. The location of components in FIG. 4B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 4B is similar to FIG. 4A, with the exception that the fan 246 includes a fan drive 244B. The fan drive 244B may be a switch, such as a contactor or relay, that connects the fan 246 to the DC power bus 313. In other embodiments, the fan drive 244B may be a power converter, such as a DC/AC converter or a DC/DC converter. The fan drive 244B may be controlled by the controller 220.

The electrical architecture of FIG. 4B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

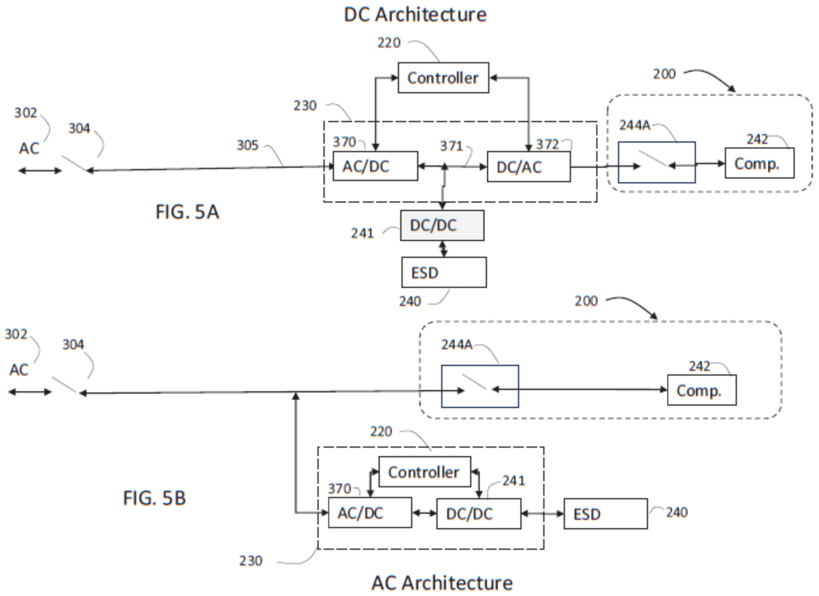

FIG. 5A depicts a DC electrical architecture for a fixed speed first unit 200 in an example embodiment. The location of components in FIG. 5A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240. As shown in Figure 5A, AC power from the AC power grid 302 is supplied through the grid disconnect 304 to a power converter 230. The power converter 230 includes an AC/DC converter 370 and a DC/AC converter 372. The output of the DC/AC converter 372 is provided to the compressor 242, through a compressor drive 244A. As the compressor 242 is fixed speed, the compressor drive 244A may be a switch, such as a contactor or relay.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, DC\DC converters 320 and 316, and DC/AC converter 347, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 5A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5B depicts an AC electrical architecture for a fixed speed first unit 200 in an example embodiment. The location of components in FIG. 5B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

In FIG. 5B, the power converter 230 includes a DC/DC converter 241 coupled to the energy storage device 240 and an AC/DC converter 370. The AC/DC converter 370 may be bi-directional to allow the energy storage device 240 to provide power to, and be charged from, the AC power grid 302. As the compressor 242 is fixed speed, the compressor drive 244A may be a switch, such as a contactor or relay.

The controller 220, the power converter 230, the energy storage device 240 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

The electrical architecture of FIG. 5B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

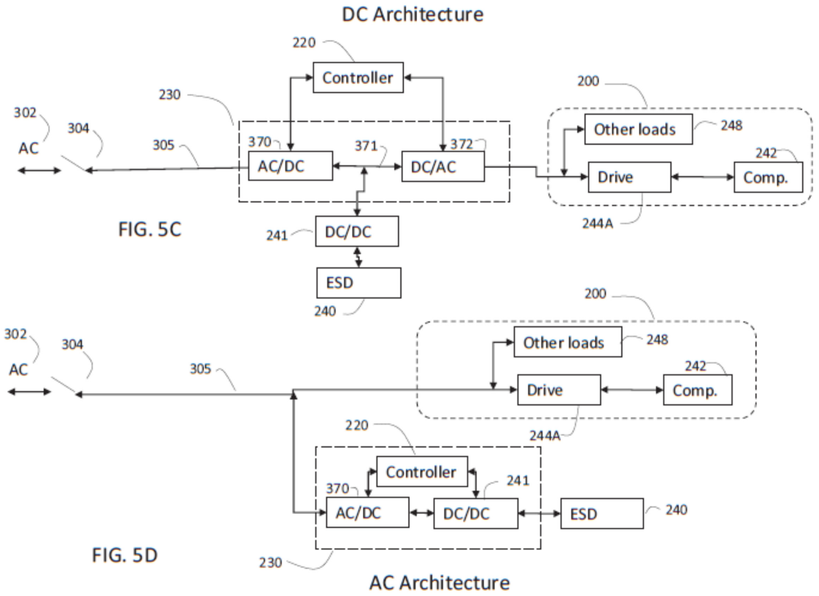

FIG. 5C depicts a DC electrical architecture for a variable speed first unit 200 in an example embodiment. The location of components in FIG. 5C is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 5C is similar to FIG. 5A, with the exception that the compressor drive 244A provides for variable speed operation of the compressor 242. Other loads 248 of the first unit 200 may be powered from the output of the DC/AC converter 372.

The controller 220, the power converter 230, the energy storage device 240 and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The electrical architecture of FIG. 5C allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5D depicts an AC electrical architecture for a variable speed first unit 200 in an example embodiment. The location of components in FIG. 5D is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 5D is similar to FIG. 5B, with the exception that the compressor drive 244A provides for variable speed operation of the compressor 242. Other loads 248 of the first unit 200 may be powered from the AC power bus 305.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The controller 220, the power converter 230 and the energy storage device 240 may be retrofit to an existing first unit 200. This allows the energy storage device 240 to be added to existing air conditioning systems to enable the first unit 200 to operate independent of the AC power grid 302 or operate under power from both the AC power grid and the energy storage device 240.

The electrical architecture of FIG. 5D allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

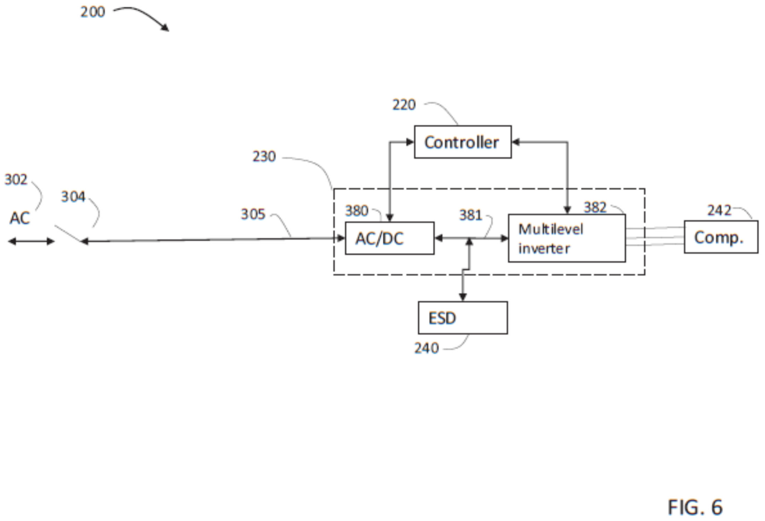

FIG. 6 depicts an electrical architecture having a variable speed compressor drive including a multilevel inverter in an example embodiment. Not all components of the first unit 200 are shown for ease of illustration and explanation. The location of components in FIG. 6 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

As shown in FIG. 6, AC power from the AC power grid 302 is supplied through the grid disconnect 304 to power converter 230. The power converter 230includes an AC/DC converter 380 and a multilevel inverter 382. The output of the multilevel inverter 382 is provided to the compressor 242. The output of the multilevel inverter 382 may be a multi-phase, multi-level waveform configured to drive a multi-phase motor of the compressor 242. In an example embodiment, the multilevel inverter 382 is a five-level, three phase inverter. In another example embodiment, the multilevel inverter 382 is a three-level, three phase inverter.

The multilevel inverter 382 synthesizes a sinusoidal current waveform to run and control the compressor 242. This is done traditionally by a two-level inverter. Integration with the energy storage device 240 allows for a natural progression to higher order inverters. Three and five level inverters require independent power supplies to set the voltage levels. In the embodiment of FIG. 6, the energy storage device 240 can set the voltage levels. The energy storage device 240 may include internal battery modules connected in series. The multilevel inverter 382 directly uses the battery modules for each requisite voltage level thereby enabling the benefits of a multilevel inverter. The multilevel inverter 382 benefits from lower harmonic output and lower dv/dt device stresses. The multilevel inverter 382 increases reliability through the ability to reconfigure to a lower number of levels after a fault has occurred, through the integration of back-to-back switches or relays, connecting or disconnecting battery modules together.

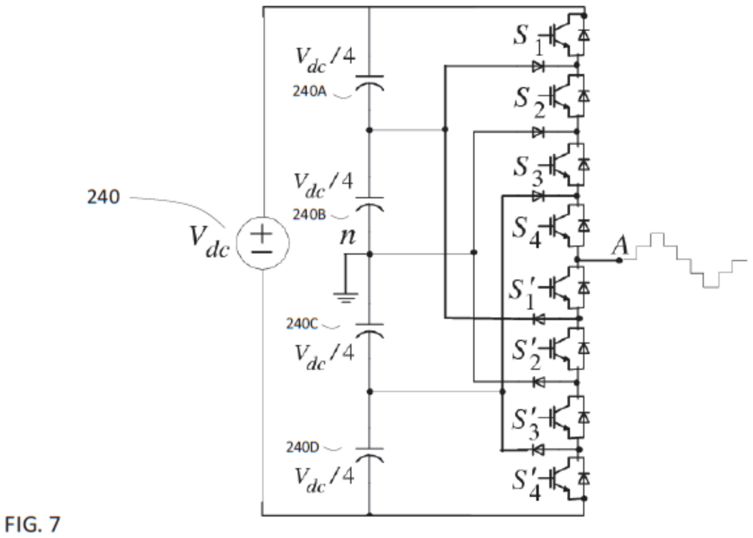

FIG. 7 shows one phase leg of a five level, multiphase inverter in an embodiment of the multilevel inverter 382. The energy storage device 240 includes at least four battery modules 240A, 240B, 240C and 240D, connected in series. The combination of the battery modules 240A, 240B, 240C and 240D, and a neutral point, n, provides the five voltage levels used to create a sinusoidal output waveform on one phase. In general, using N battery module voltages provides for an N+1 level output waveform for each phase. Switches S1-S4 and S1'-S4' are controlled by the controller 220 to produce a sine wave as known in the art. The multilevel inverter 382 can be reconfigured to fewer levels through the integration of back-to-back switches or relays, connecting or disconnecting battery modules together.

The voltage levels used in the multilevel inverter 382 do not need to be supplied by separate battery modules. The voltage levels used to create the sinusoidal output waveform can be created using one battery module, with the battery voltage being split, for example, by capacitors.

Referring the FIG. 6, both the AC/DC converter 370 and the multilevel inverter 382 operate under the control of the controller 220. Between the AC/DC converter 370 and the multilevel inverter 382 is a DC link 381 that is connected to the energy storage device 240. Under this arrangement, energy storage device 240 may be charged by the power converter 230. Alternatively, the energy storage device 240 may provide DC power to the DC link 381 to power the multilevel inverter 382 and compressor 242. This allows the first unit 200 to operate independent of the AC power grid 302 or operate under power from both the AC power grid 302 and the energy storage device 240. The AC/DC converter 380 may be bi-directional to allow the energy storage device 240 to provide power to, and be charged from, the AC power grid.

The electrical architecture of FIG. 6 allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

In the above embodiments, one or more auxiliary DC sources may be used to provide DC power. The one or more auxiliary DC sources, may include sources such as solar DC power, wind DC power, geothermal DC power, fuel cells, etc.

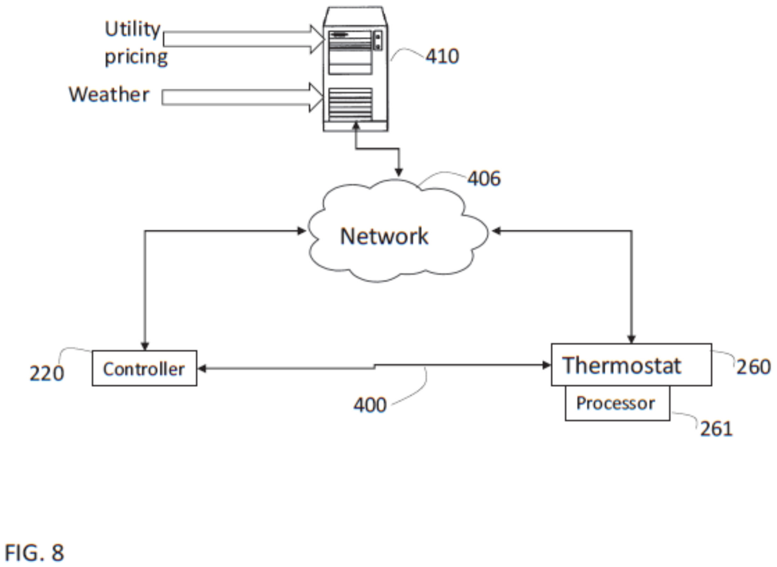

FIG. 8 depicts communication between the controller 220, the thermostat 260 and a remote system 410 in an example embodiment. As noted above, the controller 220 may be integrated as part of an air conditioning controller and/or a battery controller, or be independent and communicating to the air conditioning controller and/or energy storage controller. The controller 220 communicates with the thermostat 260 over a local link 400. The local link 400 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy, past performance, and weather information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 provides information that is used by the controller 220 and/or thermostat 260 to implement an energy management routine that controls how power is consumed by the one or more components of the air conditioning system and the loads 270. The information provided by the remote system 410 may include utility pricing, indicating the cost of electricity on the AC power grid 302 and weather information, which may be used to predict future utility pricing and usage of the one or more components of the air conditioning system. The utility pricing and weather may be pushed to, or pulled by, the remote system 410 using known networking techniques. The utility pricing and/or weather may be determined in real time or be forecasts of future conditions.

In the above-described embodiments, the controller 220 communicates with components of the described systems using wired and/or wireless connections, which are not illustrated in the drawings. Depending on the power sources used in an operation mode (e.g., one or more of AC grid power, energy storage device power, auxiliary power sources, etc.) the controller 220 sends command signals to the various system components, (for example, AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382, AC disconnect 304, etc.) to route power to one or more components of the air conditioning system, such as the first unit 200, the second unit(s) 250, along with the indoor load(s) 270, and any other loads.

FIG. 9 depicts an energy management process in an example embodiment. The process may be performed by the controller 220 and/or by the thermostat 260. At 600, the controller 220 determines if a request for a reduction in energy usage is present, or any other communication signal, such as a change in energy pricing, or an incentive. The utility provider may request a reduction in energy usage during a certain period of time to avoid a service interpretation (e.g., a brownout), or other penalty or incentive such as a change in pricing. The request for a reduction in energy usage may be accompanied by an incentive (e.g., $5 off next energy bill). The request for reduction may also originate from an energy consumer, such as a data center, where the data center needs to maintain their processing and/or cooling loads and incentivizes other users to decrease their consumption to ensure energy availability.

If a request for a reduction in energy usage is present, flow proceeds to 602 where a user (e.g., a customer of the utility) can approve or deny the request to reduce energy usage. The approve or deny determination may be pre-established by the user and pre-programmed into the controller 220 and/or the thermostat 260. For example, the user may wish to always reduce energy consumption, regardless of the terms. The user may wish to never reduce energy consumption, regardless of the terms. The user may wish to reduce energy consumption only if the utility offers an incentive. The approve or deny determination at 602 may also be in real time, where the user enters an approval or denial of reduced energy consumption through the thermostat 260 or through a mobile device.

If the user approves reduced energy usage at 602, flow proceeds to 604 where one or more components of the air conditioning system (if needed), and/or other loads, are powered, at least in part, by the energy storage device 240. This may entail opening the AC disconnect 304 (e.g., power from the AC power grid 302 is zero) and powering one or more components of the air conditioning system and/or other loads, using only the energy storage device 240. Operating one or more components of the air conditioning system and/or other loads may also include using both the AC power grid 302 and the energy storage device 240, in conjunction, to power the one or more components of the air conditioning system and/or other loads. The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. The energy storage device 240 and the AC power grid 302 are used in conjunction to power one or more components of the air conditioning system and/or one or more loads.

Operating the one or more components of the air conditioning system using the energy storage device 240 may also include limiting the amount of power used from the AC power grid 302 to a power limit (e.g., 1 kW during 2 hours). The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. At 604, other loads may be powered by the energy storage device 240, including indoor load(s) 270, which may include indoor DC load(s) 318 and/or indoor AC load(s) 308. The process returns to 600.

At some point, the energy storage device 240 will lack sufficient charge such that the one or more components of the air conditioning system will need to be powered exclusively by the AC power grid 302. The controller 220 can detect when a status, such as state of charge (SOC), state of health (SoH), voltage, temperature, etc., of the energy storage device 240 is not within acceptable limits to power the one or more components of the air conditioning system or other loads. If the status of the energy storage device 240 is not within acceptable limits, the one or more components of the air conditioning system and/or other loads need to be powered by the AC power grid 302. This results in discontinuing discharging the energy storage 240 and/or initiating charging the energy storage device 240.

If the utility, or some other source, has not requested to reduce the energy usage at 600, flow proceeds to 606 where the controller 220 determines if the system 100 should use power from the energy storage device 240. One example of a situation where the system 100 should use power from the energy storage device 240 occurs when the utility power is at least one of at a peak price, approaching a grid capacity or at the grid capacity. This determination may be made in real time or may be made previously using forecasting and communicated to the air conditioning system from the utility. Peak price does not necessarily require that the price for electricity be at a maximum, but is generally known in the art as a period of higher than average energy costs. Whether the utility is at a peak price may be determined by utility pricing obtained from the remote system 410 or current or future weather information obtained from the remote system 410. This information may also be locally stored at controller 220. If the utility is at least one of at a peak price, approaching a grid capacity or at the grid capacity, flow proceeds to 604 where the one or more components of the air conditioning system and loads 270, including indoor AC loads 308 and/or other loads are powered by the energy storage device 240 alone or in conjunction with the AC power grid 302. The controller 220 can limit the amount of power drawn from the AC power grid 302 by controlling the various power converters 230 in the system, as noted above. The utility power at a peak price and grid capacity are not the only factors that may be relied on in determining that the system should use power from the energy storage device 240.

With respect to grid capacity, information regarding the grid capacity and current grid load can be obtained from a remote system, such as the source of the utility pricing. If the AC power grid 302 is at grid capacity or approaching grid capacity (e.g., within a threshold range of grid capacity and, optionally, increasing), then it may be prudent to use power from the energy storage device 240 to avoid a power disruption.

Another example of a situation where the system should use power from the energy storage device 240 occurs when a user requests reduced energy usage. The user may use the thermostat 260 to place the system 100 in reduced energy usage mode (e.g., eco-friendly mode) which causes the system to use power from the energy storage device 240 to power one or more components of the air conditioning system.

In another example, the system may use power from the energy storage device 240 based on machine learning (ML) and/or artificial intelligence (AI) control algorithms implemented by controller 220 based on data from block 602 (e.g., User agree), or based on data from block 600 (e.g., Request reduced energy usage).

If at 606, the system should not use power from the energy storage device 240, flow proceeds to 608 where the energy storage device 240 is charged using the AC power grid 302. At 610, the controller 220 determines if the battery status is within acceptable limits, including state of charge (SOC), state of health (SoH), temperature, voltage, or status beyond safety and/or operational limits. If yes, flow returns to 600. At 610, the controller 220 can detect parameters of the energy storage device 240, to confirm that parameters such as state of health of the battery, operating range, temperature range, voltages, capacity, etc., are within the valid limits.

It should be noted that the energy storage device 240 may be charged even if the utility power is at a peak price. This may include failure modes, test modes, etc. Thus, charging the energy storage device 240 is not limited to off-peak utility power price times.

If at 610, the energy storage device has a status that is not within acceptable limits, flow proceeds to 612 where the energy storage device 240 may be charged if the SoC is low or may be disconnected completely if the energy storage device 240 is not operating per safety and/or operational limits.

While FIG. 9 refers to operating one or more components of the air conditioning system and/or other loads to reduce power consumption, other techniques may be used to reduce power consumption, such as using a variable speed drive to reduce compressor speed, changing a thermostat set-point, etc. In other embodiments, the utility could request an increase in energy usage. This request can be a real-time or a future request based on predicted conditions. Increasing energy usage may include charging the energy storage device 240.

One or more operations of the process of FIG. 9 may be performed by the thermostat 260, if the thermostat 260 is equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat may perform all or some of the operations of FIG. 9, in conjunction or individually.

In other embodiments, the controller 220 and/or the thermostat 260 executes a system enhancement routine to improve performance of the entire air conditioning system, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating, that have an advantage on cost, performance, efficiency, environment, comfort, reliability, may be implemented by the controller 220 and/or the thermostat 260.

Generally, in an HVAC system with a battery similar to those described above, the battery can be used as a temporary alternative source of power for large energy needs of the outdoor unit during certain times such as when grid power is expensive, for example. This type of solution can substantially reduce grid power requirements while keeping the HVAC system functioning, but only as long as grid power is still supplied to the system. Using the battery to also power the indoor unit when the grid is not available would require expensive rewiring.

Thus, as will be described below, an HVAC system is provided with outdoor and indoor units, a battery provided with the outdoor unit and a unique transfer and redirect switch (hereinafter referred to as "switch") near a building's electrical panel. In an event of a grid power outage, the switch would disconnect both the indoor and outdoor units from the panel and connect a power line of the outdoor unit, which is normally used to transmit power from the panel to the outdoor unit, to the power line of the indoor unit. This would allow the battery of the outdoor unit to backfeed power to components of the indoor unit, thereby maintaining HVAC operation for the building without grid power.

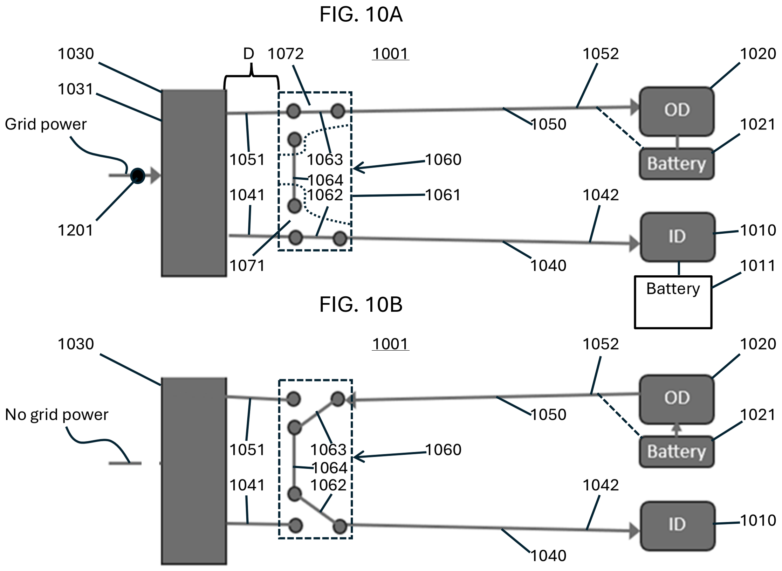

With reference to FIGS. 10A and 10B, an HVAC system 1001 is provided and includes a first HVAC unit 1010, which can include or be provided as an indoor unit, a second HVAC unit 1020, which includes a battery 1021 that can power certain components of the second HVAC unit 1020 and which can include or be provided as an outdoor unit. The HVAC system 1001 further includes a panel 1030 that is receptive of grid power, a first power line 1040, a second power line 1050 and a switch element 1060, which is separate from the panel 1030. The first power line 1040 is disposed and configured such that electricity is transmissible from the panel 1030 to the first HVAC unit 1010 via the first power line 1040. The first power line 1040 includes a first segment 1041 proximate to the panel 1030 and a second segment 1042 proximate to the first HVAC unit 1010. The second power line 1050 is disposed and configured such that electricity is transmissible from the panel 1030 to the second HVAC unit 1020 via the second power line 1050. The second power line 1050 includes a first segment 1051 proximate to the panel 1030 and a second segment 1052 proximate to the second HVAC unit 1020.

As shown in FIG. 10A, the switch element 1060 can be disposed at a distance D from the panel 1030 and can include a housing 1061 that is separate and distinct from a housing 1031 of the panel 1030. In addition, whereas the panel 1030 may be installed along with the first and second HVAC units 1010 and 1020 and the first and second power lines 1040 and 1050 when the HVAC system 1001 is initially assembled and installed, the switch element 1060 can be installed at a later time in order to retrofit the HVAC system 1001 for battery switching capability.

The switch element 1060 is separate from the panel 1030 and is configured to assume a first state when the grid power is available and a second state when the grid power is unavailable. The switch element 1060 can include a first switch element portion 1062, a second switch element portion 1063 and a third switch element portion 1064. When the switch element 1060 assumes the first state (see FIG. 10A), the third switch element portion 1064 is electrically disconnected from the first and second switch element portions 1062 and 1063. When the switch element 1060 assumes the second state (see FIG. 10B), the third switch element portion 1064 is electrically interposed and connected between the first and second switch element portions 1062 and 1063.

As shown in FIG. 10A, the first state of the switch element 1060 is characterized in that electricity is transmissible from the panel 1030 and to the first and second HVAC units 1010 and 1020 via the first and second power lines 1040 and 1050, respectively, when the grid power is available. That is, with the switch element 1060 disposed in the first state, the first switch element portion 1062 electrically connects the first segment 1041 and the second segment 1042 of the first power line 1040 so that electricity can flow along the first power line 1040 from the panel 1030 and to the first HVAC unit 1010 and the second switch element portion 1063 electrically connects the first segment 1051 and the second segment 1052 of the second power line 1050 so that electricity can flow along the second power line 1050 from the panel 1030 and to the second HVAC unit 1050.

As shown in FIG. 10B, the second state of the switch element 1060 is characterized in that the first and second power lines 1040 and 1050 are electrically open and electricity is transmissible from the second HVAC unit 1020 and the battery 1021 and to the first HVAC unit 1010 when the grid power is unavailable. That is, with the switch element 1060 disposed in the second state, the first and second switch element portions 1062 and 1063 electrically disconnect the respective first segments 1041 and 1051 of the first and second power lines 1040 and 1050 from the respective second segments 1042 and 1052 of the first and second power lines 1040 and 1050 and electrically connect the respective second segments 1042 and 1052 of the first and second power lines 1040 and 1050 across the third switch element portion 1064 so that electricity can flow from the second HVAC unit 1020 and the battery 1021 and to the first HVAC unit 1010.

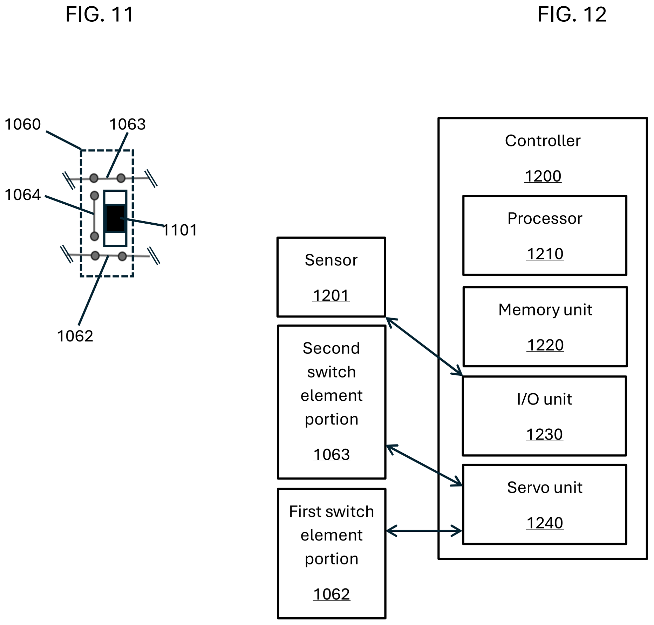

With reference to FIG. 11, the switch element 1060 can include a switch actuator 1101 that is manually operable. The switch actuator 1101 can be coupled to the first and second switch element portions 1062 and 1063 and can be configured to be manually operated by an operator to manipulate the first and second switch element portions 1062 and 1063 so as to place the switch element 1060 in the first state or the second state.

With reference to FIG. 12, the switch element 1060 can be automatic and can include a controller 1200 to automatically place the switch element 1060 in the first state in accordance with the grid power being available and in the second state in accordance with the grid power being unavailable. In this case, the HVAC system 1001 can further include a sensor 1201 (see FIG. 10A) to sense whether grid power is available or unavailable. The sensor 1201 can include or be provided as one or more of a current sensor and a voltage sensor, for example, and can be disposed along an input line for grid power leading to the panel 1030. As shown in FIG. 12, the controller 1200 can include a processor 1210, a memory unit 1220, an input/output (I/O) unit 1230 by which the processor 1210 is communicative with the sensor 1201 and a servo unit 1240 by which the processor 1210 controls the first and second switch element portions 1062 and 1063 of the switch element 1060. The memory unit 1220 has executable instructions stored thereon, which are readable and executable by the processor 1210. When the executable instructions are read and executed by the processor 1210, the processor 1210 is caused to operate as described herein. In particular, when the executable instructions are read and executed by the processor 1210, the processor 1210 determines whether the grid power is available from readings of the sensor 1201, causes the switch element 1060 to assume the first state in an event the grid power is available by way of the servo unit 1240 and causes the switch element 1060 to assume the second state in an event the grid power is unavailable by way of the servo unit 1240.

In some cases, it is to be understood that one of the first and second states of the switch element 1060 can be biased. That is, the switch element 1060 can be biased to assume the first state, in which case, the switch element 1060 must be actively operated (i.e., manually or automatically by the controller 1200) to assume the second state.

In some cases, the first HVAC unit 1010 can include an additional battery 1011 (see FIG. 10A) that can power certain components of the first HVAC unit 1010. In these or other cases, the processor 1210 can be further configured such that, when the executable instructions are read and executed by the processor 1210, the processor 1210 is caused to operate the switch element 1060 to optimize power sharing between the battery 1021 and the additional battery 1011.

With reference back to FIG. 10A, the switch element 1060 can include a first switch 1071, of which the first switch element portion 1062 is a component, and a second switch 1072, of which the second switch element portion 1063 is a component. The first switch 1071 is electrically interposed between the panel 1030 and the first HVAC unit 1010 along the first power line 1040 and the second switch 1072 is electrically interposed between the panel 1030 and the second HVAC unit 1020 along the second power line 1050 generally as described above. In these or other cases, the first and second switches 1071 and 1072 can operate independently from one another (i.e., each of the first and second switches 1071 and 1072 can be separately manually operated and/or the controller 1200 can have separate logic for automatically operating the first and second switches 1071 and 1072) and/or in tandem (i.e., where only one of the first and second switches 1071 and 1072 is actively operated, such as in a master-slave configuration).

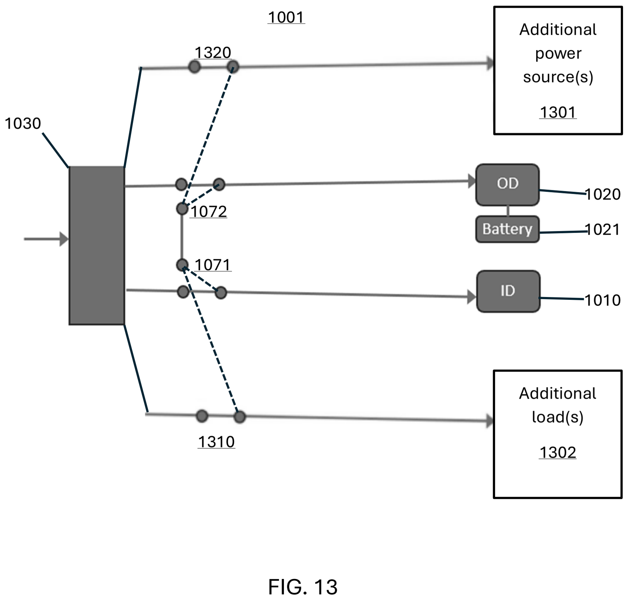

With reference to FIG. 13, the HVAC system 1001 can further include at least one of one or more additional power sources 1301 in parallel with the battery 1021 and one or more additional first switches 1310 in parallel with the first switch 1071 and one or more additional loads 1302 in parallel with the first unit 1010 and one or more additional second switches 1320 in parallel with the second switch 1072. With this configuration, the first and second switches 1071 and 1072, the one or more additional first switches 1310 and the one or more additional second switches 1320 can be controlled to assume additional states in which the one or more additional power sources 1301, the second HVAC unit 1020 and the battery 1021 can be electrically communicative with the one or more additional loads 1302 and the first HVAC unit 1010.

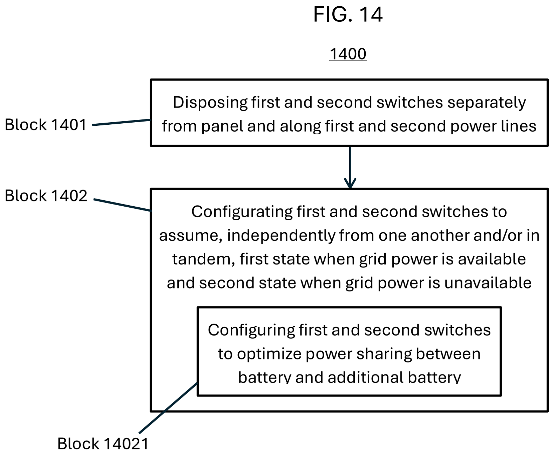

With reference to FIG. 14, a method 1400 of retrofitting an HVAC system, such as the HVAC system 1001 of FIGS. 10A-13, with battery switching is provided the HVAC system initially includes first and second power lines electrically interposed between a panel, which is receptive of grid power, and first and second HVAC units, respectively. The method 1400 includes disposing first and second switches separately from the panel and along the first and second power lines, respectively (block 1401) and configuring the first and second switches (block 1402) to assume, independently from one another and/or in tandem, the above-described first state when the grid power is available and the above-described second state when the grid power is unavailable. Where the first HVAC unit includes an additional battery, the configuring of the first and second switches of block 1402 can further include configuring the first and second switches to optimize power sharing between the battery and the additional battery (block 14021).

It is to be understood that the embodiments of FIGS. 10A, 10B, 11 and 13 can relate to cases in which current is AC or DC. In the cases of the current being DC, for example, such as when the panel 1030 is disconnected and the first HVAC unit 1010 is operating on electricity drawn from the battery 1021, the DC from the battery 1021 may be sent to the first HVAC unit 1010 directly through the backfeed circuit of the first and second power lines 1040 and 1050 and the switch element 1060, rather than converting the DC to AC. Thus, as shown in FIGS. 10A and 10B, for example, the second segment 1052 of the second power line 1050 can be electrically connected directly to and/or electrically connectable directly with the battery 1021 (this can be true for the embodiments of FIG. 13 as well).

Technical effects and benefits of the present disclosure include provision of an HVAC system that can maintain operation without grid power. Whereas typical back-up battery (or generator) solutions are enacted at the electrical panel to disconnect circuits from the grid and to power them from an alternative source where all circuit wiring still provides power from the panel to devices, the approach described herein repurposes the branch circuit to the outdoor unit to reverse power flow along it and to transmit power from the outdoor battery and into the indoor unit

As described above, embodiments can be in the form of processor-implemented processes and devices for practicing those processes, such as a controller 240 and/or the thermostat 260. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified to incorporate any number of variations, alterations, substitutions, combinations, sub-combinations, or equivalent arrangements not heretofore described, but which are commensurate with the scope of the present invention as defined by the appended claims. Additionally, while various embodiments of the present invention have been described, it is to be understood that aspects of the present invention may include only some of the described embodiments. Accordingly, the present invention is not to be seen as limited by the foregoing description, but is only limited by the scope of the appended claims.

The following clauses set out features of the invention which may or may not presently be claimed in this application, but which may form the basis for future amendment or a divisional application.
1. A heating, ventilation and air-conditioning (HVAC) system, comprising: a first HVAC unit; a second HVAC unit comprising a battery; a panel receptive of grid power; and a switch element separate from the panel and configured to assume: a first state in which electricity is transmissible from the panel to the first and second HVAC units when the grid power is available, and a second state in which electricity is transmissible from the battery to the first HVAC unit when the grid power is unavailable.
2. The HVAC system according to clause 1, wherein the electricity is transmissible from the battery to the first HVAC unit as direct current (DC).
3. The HVAC system according to either of clauses 1 or 2, wherein the switch element is automatic and comprises a controller to place the switch element in the first and second states in accordance with the grid power being available and unavailable, respectively.
4. The HVAC system according to clause 3, wherein the first HVAC unit comprises an additional battery and the controller operates the switch element to optimize power sharing between the battery and the additional battery.
5. The HVAC system according to any of clauses 1-4, wherein the switch element comprises a first switch electrically interposed between the panel and the first HVAC unit and a second switch electrically interposed between the panel and the second HVAC unit and the first and second switches operate independently from one another.
6. The HVAC system according to clause 5, further comprising at least one of: one or more additional power sources in parallel with the battery and one or more additional first switches in parallel with the first switch; and one or more additional loads in parallel with the first HVAC unit and one or more additional second switches in parallel with the second switch.
7. The HVAC system according to any of clauses 1-4 and 6, wherein the switch element comprises a first switch electrically interposed between the panel and the first HVAC unit and a second switch electrically interposed between the panel and the second HVAC unit and the first and second switches operate in tandem.
8. The HVAC system according to clause 7, further comprising at least one of: one or more additional power sources in parallel with the battery and one or more additional first switches in parallel with the first switch; and one or more additional loads in parallel with the first HVAC unit and one or more additional second switches in parallel with the second switch.
9. A heating, ventilation and air-conditioning (HVAC) system, comprising: a first HVAC unit; a second HVAC unit comprising a battery; a panel receptive of grid power; first and second power lines by which electricity is transmissible from the panel to the first and second HVAC units, respectively; and a switch element separate from the panel and configured to assume: a first state in which electricity is transmissible from the panel to the first and second HVAC units via the first and second power lines, respectively, when the grid power is available, and a second state in which the first and second power lines are electrically open and electricity is transmissible from the battery to the first HVAC unit when the grid power is unavailable.
10. The HVAC system according to clause 9, wherein the electricity is transmissible from the battery to the first HVAC unit as direct current (DC).
11. The HVAC system according to either of clause 9 or 10, wherein the switch element is automatic and comprises a controller to place the switch element in the first and second states in accordance with the grid power being available and unavailable, respectively.
12. The HVAC system according to clause 11, wherein the first HVAC unit comprises an additional battery and the controller operates the switch element to optimize power sharing between the battery and the additional battery.
13. The HVAC system according to any of clauses 9-12, wherein the switch element comprises a first switch electrically interposed between the panel and the first HVAC unit along the first power line and a second switch electrically interposed between the panel and the second HVAC unit along the second power line and the first and second switches operate independently from one another.
14. The HVAC system according to clause 13, further comprising at least one of: one or more additional power sources in parallel with the battery and one or more additional first switches in parallel with the first switch; and one or more additional loads in parallel with the first HVAC unit and one or more additional second switches in parallel with the second switch.
15. The HVAC system according to any of clauses 9-12 and 14, wherein the switch element comprises a first switch electrically interposed between the panel and the first HVAC unit along the first power line and a second switch electrically interposed between the panel and the second HVAC unit along the second power line and the first and second switches operate in tandem.
16. The HVAC system according to clause 15, further comprising at least one of: one or more additional power sources in parallel with the battery and one or more additional first switches in parallel with the first switch; and one or more additional loads in parallel with the first HVAC unit and one or more additional second switches in parallel with the second switch.
17. A method of retrofitting a heating, ventilation and air-conditioning (HVAC) system with battery switching, the HVAC system initially comprising first and second power lines electrically interposed between a panel, which is receptive of grid power, and first and second HVAC units, respectively, the method comprising:
   disposing first and second switches separately from the panel and along the first and
   second power lines, respectively; and configuring the first and second switches to assume: a first state in which electricity is transmissible from the panel to the first and
   second HVAC units via the first and second power lines, respectively, when the grid power is available, and a second state in which the first and second power lines are electrically open and electricity is transmissible from a battery of the second HVAC unit to the first HVAC unit when the grid power is unavailable.
18. The method according to clause 17, wherein: the first HVAC unit comprises an additional battery, and the configuring of the first and second switches comprises configuring the first and second switches to optimize power sharing between the battery and the additional battery.
19. The method according to either of clause 17 or 18, wherein the configuring of the first and second switches comprises configuring the first and second switches to operate independently from one another.
20. The method according to either of clause 17 or 18, wherein the configuring of the first and second switches comprises configuring the first and second switches to operate in tandem.

## Claims

1. A heating, ventilation and air-conditioning, HVAC, system (1001), comprising:
a first HVAC unit (1010);
a second HVAC unit (1020) comprising a battery (1021);
a panel (1030) receptive of grid power; and
a switch element (1060) separate from the panel and configured to assume:
a first state in which electricity is transmissible from the panel to the first and second HVAC units when the grid power is available, and
a second state in which electricity is transmissible from the battery to the first HVAC unit when the grid power is unavailable.

2. The HVAC system (1001) according to claim 1, wherein the electricity is transmissible from the battery (1021) to the first HVAC unit (1010) as direct current (DC).

3. The HVAC system (1001) according to either of claims 1 or 2, wherein the switch element (1060) is automatic and comprises a controller (1200) to place the switch element in the first and second states in accordance with the grid power being available and unavailable, respectively.

4. The HVAC system (1001) according to claim 3, wherein the first HVAC unit (1010) comprises an additional battery (1011) and the controller (1200) operates the switch element (1060) to optimize power sharing between the battery (1021) and the additional battery.

5. The HVAC system (1001) according to any of claims 1-4, wherein the switch element (1060) comprises a first switch (1070) electrically interposed between the panel (1030) and the first HVAC unit (1010) and a second switch (1072) electrically interposed between the panel and the second HVAC unit (1020) and the first and second switches operate independently from one another.

6. The HVAC system (1001) according to claim 5, further comprising at least one of:
one or more additional power sources (1301) in parallel with the battery (1021) and one or more additional first switches (1310) in parallel with the first switch (1071); and
one or more additional loads (1302) in parallel with the first HVAC unit (1010) and one or more additional second switches (1320) in parallel with the second switch (1072).

7. The HVAC system (1001) according to any of claims 1-4 and 6, wherein the switch element (1060) comprises a first switch (1070) electrically interposed between the panel (1030) and the first HVAC unit (1010) and a second switch (1072) electrically interposed between the panel and the second HVAC unit (1020) and the first and second switches operate in tandem.

8. The HVAC system (1001) according to claim 7, further comprising at least one of:
one or more additional power sources (1301) in parallel with the battery (1021) and one or more additional first switches (1310) in parallel with the first switch (1071); and
one or more additional loads (1302) in parallel with the first HVAC unit (1010) and one or more additional second switches (1320) in parallel with the second switch (1072).

9. A heating, ventilation and air-conditioning, HVAC, system (1001) according to any preceding claim, comprising:
first and second power lines (1040, 1050) by which electricity is transmissible from the panel (1030) to the first and second HVAC units (1010, 1020), respectively; and
wherein, in the first state of the switch element (1060), electricity is transmissible from the panel to the first and second HVAC units via the first and second power lines, respectively, when the grid power is available, and
wherein, in the second state of the switch element, the first and second power lines are electrically open and electricity is transmissible from the battery (1021) to the first HVAC unit when the grid power is unavailable.

10. The HVAC system (1001) according to claim 9 when dependent on at least claim 5, wherein the first switch (1070) is electrically interposed between the panel (1030) and the first HVAC unit (1010) along the first power line (1040) and the second switch (1072) is electrically interposed between the panel and the second HVAC unit (1020) along the second power line (1050).

11. The HVAC system (1001) according to claim 9 when dependent on at least claim 7, wherein the first switch (1070) is electrically interposed between the panel (1030) and the first HVAC unit (1010) along the first power line (1040) and the second switch (1072) is electrically interposed between the panel and the second HVAC unit (1020) along the second power line (1050).

12. A method (1400) of retrofitting a heating, ventilation and air-conditioning, HVAC, system (1001) with battery switching,
the HVAC system initially comprising first and second power lines (1040, 1050) electrically interposed between a panel (1030), which is receptive of grid power, and first and second HVAC units (1010, 1020), respectively,
the method comprising:
disposing (1401) first and second switches (1070, 1072) separately from the panel and along the first and second power lines, respectively; and
configuring (1402) the first and second switches to assume:
a first state in which electricity is transmissible from the panel to the first and second HVAC units via the first and second power lines, respectively, when the grid power is available, and
a second state in which the first and second power lines are electrically open and electricity is transmissible from a battery (1021) of the second HVAC unit to the first HVAC unit when the grid power is unavailable.

13. The method (1400) according to claim 12, wherein:
the first HVAC unit (1010) comprises an additional battery (1011), and
the configuring (1402) of the first and second switches (1070, 1072) comprises configuring (14021) the first and second switches to optimize power sharing between the battery (1021) and the additional battery.

14. The method (1400) according to either of claims 12 or 13, wherein the configuring (1402) of the first and second switches (1070, 1072) comprises configuring the first and second switches to operate independently from one another.

15. The method (1400) according to either of claims 12 or 13, wherein the configuring (1402) of the first and second switches (1070, 1072) comprises configuring the first and second switches to operate in tandem.
